# EUROPÄISCHE PATENTSCHRIFT

(11) **EP 3 878 041 B1**
(45) Veröffentlichungstag und Bekanntmachung des Hinweises auf die Patenterteilung: **07.06.2023**
(21) Anmeldenummer: 19812731.8
(22) Anmeldetag: 25.11.2019
(51) Int. Cl.: H01M 10/04, H01M 10/0525, H01M 10/0585

(54) **VERFAHREN UND VORRICHTUNG ZUR HERSTELLUNG EINES ELEKTRODENSTAPELS**
METHOD AND APPARATUS FOR PRODUCING AN ELECTRODE STACK
PROCÉDÉ ET DISPOSITIF POUR LA FABRICATION D'UN EMPILEMENT D'ÉLECTRODES

(30) Priorität: 12.12.2018 DE 102018221571
(43) Veröffentlichungstag der Anmeldung: 15.09.2021
(73) Patentinhaber: VOLKSWAGEN AG, 38440 Wolfsburg (DE)
(72) Erfinder: JORDAN, Marco, 38229 Salzgitter (DE)
(74) Vertreter: FDST Patentanwälte
(86) Internationale Anmeldenummer: PCT/EP2019/082347
(87) Internationale Veröffentlichungsnummer: WO 2020/120109

(56) Entgegenhaltungen:
- DE-A1-102010 055 608
- JP-B2- 5 778 124
- KR-B1- 101 280 068

## Beschreibung

Die Erfindung betrifft ein Verfahren sowie eine Vorrichtung zur Herstellung eines Elektrodenstapels aus Anoden und Kathoden für eine Lithium-Ionen-Batterie. Eine solche Lithium-Ionen-Batterie weist zumindest eine Batteriezelle auf, in welcher ein Elektrodenstapel mit einer Anzahl an blattartigen Kathoden (Kathodenblättern, Kathodenfolien) und blattartigen Anoden (Anodenblättern, Anodenfolien) aufgenommen ist, wobei die Kathoden und die Anoden beispielsweise übereinander gestapelt sind, und wobei zwischen den Kathoden und den Anoden jeweils ein Separator angeordnet ist.

Der Elektrodenstapel mit übereinandergestapelten Anoden und Kathoden wird beispielsweise mittels des sogenannten Einzelblattstapelns oder mittels des sogenannten Z-Foldings hergestellt. Typischerweise werden die einzelnen Anoden und die Kathoden hierbei mittels eines Greifersystems (Greifsystems) bewegt. Ein Greifer dieses Greifersystems nimmt die jeweilige Elektrode, also die jeweilige Anode oder Kathode, auf, fördert diese haltend an einen Stapelort und legt die Elektrode dort ab. Allerdings sind solche Greifersysteme vergleichsweise langsam. Infolgedessen ist der Herstellungsprozess eines solchen Elektrodenstapels nachteilig vergleichsweise zeitaufwändig. Die Dokumente DE 10 2010 055608 A1, KR 101 280 068 B1, JP 5 778124 B2, offenbaren Verfahren zur Herstellung von Elektrodenstapel mit Greifer sowie Weiterentwicklungen zum Greifersystem.

Der Erfindung liegt die Aufgabe zugrunde, ein besonders geeignetes Verfahren sowie eine Vorrichtung zur Herstellung eines Elektrodenstapels für eine Lithium-Ionen-Batterie anzugeben. Insbesondere soll mittels des Verfahrens und/oder mittels der Vorrichtung eine möglichst zeitsparende, kostensparende und/oder fehlerunanfällige Herstellung des Elektrodenstapels realisiert sein.

Bezüglich des Verfahrens wird die genannte Aufgabe durch die Merkmale des Anspruchs 1 und hinsichtlich der Vorrichtung durch die Merkmale des Anspruchs 4 erfindungsgemäß gelöst. Vorteilhafte Weiterbildungen und Ausgestaltungen sind Gegenstand der Unteransprüche.

Bei dem Verfahren zur Herstellung eines Elektrodenstapels aus Anoden und Kathoden für eine Lithium-Ionen-Batterie (Li-Ionen-Batterie), beispielsweise eines elektrisch angetriebenen Kraftfahrzeugs, werden die Kathoden in einem ersten Magazin und die Anode in einem zweiten Magazin bereitgestellt. Die Kathoden werden greiferlos lediglich in einer ersten Richtung von dem ersten Magazin in eine Kammer greiferlos gefördert. Die Anoden werden lediglich in einer zweiten Richtung vom zweiten Magazin in die Kammer greiferlos gefördert. Dabei werden die Kathoden und die Anoden alternierend in die Kammer gefördert und entsprechend alternierend gestapelt. Zweckmäßigerweise wird zum Fördern der Anoden und der Kathoden eine Fördereinrichtung herangezogen, welche beispielsweise eine lediglich rotatorisch angetriebene Förderrolle aufweist.

Die Anoden und die Kathoden werden zusammenfassend auch als Elektroden bezeichnet. Diese sind insbesondere blattförmig ausgebildet. Die Elektroden weisen also in einer Raumrichtung eine vergleichsweise kleine Ausdehnung auf, mit anderen Worten sind die Elektroden flächig ausgebildet. Die Elektroden werden auch als Elektrodenblätter (sheets), die Anoden und die Kathoden entsprechend als Anodenblätter bzw. Kathodenblätter bezeichnet. An den (Flächen-)Seiten der bereitgestellten Kathoden, also an den flächigen Seiten der Kathoden, ist zweckmäßigerweise jeweils ein Separator angeordnet. Insbesondere ist die Kathode beidseitig mit einem Separator (einer Separatorfolie) laminiert. Infolge dessen ist im Elektrodenstapel zwischen den Anoden und den Kathoden jeweils ein Separator angeordnet. Die Elektroden weisen zweckmäßigerweise jeweils eine auch als Tab bezeichnete elektrische Kontaktierung auf, welche mittels eines Stromableiters der jeweiligen Elektrode gebildet ist. Dabei ragt der die Kontaktierung bildende Abschnitt des Stromableiters über eine Stirnseite der Elektrode hinaus.

Der Verbund aus Separatorfolie und Kathode, also die laminierte Kathode, weist besonders bevorzugt die gleichen Abmessungen auf wie die Anoden, ggf. mit Ausnahme im Bereich der elektrischen Kontaktierung. Mit anderen Worten stimmt die Ausdehnung des Verbundes aus Separatorfolie und Kathode in einer durch die jeweilige Kathode aufgespannten Ebene mit der Ausdehnung der Anoden in einer durch die jeweilige Anode aufgespannten Ebene überein. Im Folgenden ist unter einer Kathode zum Zwecke einer besseren Verständlichkeit der Verbund aus Separatorfolie und Kathode, also die laminierte Kathode, zu verstehen. Diese Ausführungen zu den Elektroden gelten auch in Bezug auf die Ausführungen zur Vorrichtung zur Herstellung eines Elektrodenstapels.

In einem darauf folgenden Schritt werden die alternierend gestapelten Kathoden und Anoden in der Kammer, insbesondere mittels Stempeln, fluchtend ausgerichtet und, insbesondere mittels einer Kompressionseinheit, gegeneinander verpresst. Insbesondere werden die Anoden und die Kathoden entlang deren gesamten Umfang zueinander fluchtend ausgerichtet, mit Ausnahme im Bereich der Kontaktierungen der Anoden bzw. der Kathoden.

Bei den eingangs erwähnten Greifersystemen werden die Elektroden (Elektrodenblätter) aus dem jeweiligen Magazin entnommen, hierbei typischerweise angehoben, gefördert, und anschließend, beispielsweise in einer Kammer, abgelegt. Hierbei wird die jeweilige Elektrode vom Greifer gehalten. Der die jeweilige Elektrode haltende Greifer des Greifersystems wird dabei im Zuge der Förderung der Elektrode entsprechend mitverfahren. Dabei unterscheiden sich die Richtungen in welchen die Elektrode bewegt wird beim Verfahren, beim Ablegen und bei der Entnahme. Die Greifer werden also beim Halten der Anoden bzw. der Kathoden in mehr als eine einzige Richtung bewegt. Im Vergleich zu solchen Greifersystemen erfolgt hier die Förderung der Kathoden und der Anoden in die Kammer greiferlos, also ohne die Verwendung eines Greifersystems. Die Elektroden werden lediglich in jeweils einer einzigen Richtung von dem Magazin in die Kammer gefördert. Insbesondere werden Elektroden dabei nicht gehalten, und/oder die die Elektrode fördernde (Förder-) Einrichtung wird nicht verfahren. Insbesondere werden die Elektroden mittels der Fördereinrichtung lediglich in der ersten Richtung bzw. in der zweiten Richtung mit einem Impuls beaufschlagt, beispielswiese angestoßen oder angetrieben, so dass die Elektroden aufgrund deren Trägheit in die Kammer bewegt werden. Eine solche Förderung ist besonders vorteilhaft vergleichsweise schnell. Infolge dessen ist auch das gesamte Verfahren zur Herstellung des Elektrodenstapels schneller. Somit ist eine Prozessrate der Herstellung des Elektrodenstapels vorteilhaft erhöht, mit anderen Worten ist ein Durchsatz erhöht.

Die erste Richtung und die zweite Richtung werden dabei jeweils als Förderrichtung bezeichnet. Beispielsweise sind die erste Richtung und/oder die zweite Richtung mittels einer Führungsschiene bestimmt.

Gemäß einer geeigneten Weiterbildung verlaufen die erste Richtung und die zweite Richtung in einer gemeinsamen Ebene, wobei die Ebene senkrecht zu einem Kammerboden der Kammer orientiert ist. Vorzugsweise sind dabei die erste Richtung und die zweite Richtung antiparallel zueinander orientiert, oder im Wesentlichen antiparallel und lediglich geringfügig, beispielsweise weniger als 30°, insbesondere weniger als 20°, gegen den Kammerboden geneigt. Auf diese Weise werden die Kathoden und die Anoden von einander gegenüberliegenden Seiten der Kammer in diese eingebracht. Die Neigung der ersten und/oder der zweiten Richtung erleichtert dabei das Überführen der jeweiligen Elektrode in die Kammer.

Sofern die Elektroden mittels einer Führungsschiene geführt werden, werden die Elektroden vorzugsweise derart gefördert, dass diejenige Stirnseite, zu welcher die elektrische Kontaktierung herausragt, senkrecht zur Förderrichtung, also senkrecht zu den Führungsschienen, orientiert ist. Somit wird eine Beschädigung der elektrischen Kontaktierungen an den Führungsschienen bei der Förderung vermieden. Im Elektrodenstapel sind die elektrischen Kontaktierungen der Anoden und der Kathoden beispielsweise an einer gemeinsamen Stirnseite des Elektrodenstapels oder an parallel zueinander und gegenüberliegenden Stirnseiten des Elektrodenstapels angeordnet. Infolge dessen verlaufen die erste (Förder-) Richtung und die zweite (Förder-) Richtung, zweckmäßigerweise im Wesentlichen antiparallel und in einer gemeinsamen Ebene, welche senkrecht zum Kammerboden der Kammer orientiert ist.

Gemäß einer geeigneten Weiterbildung werden die in die Kammer geförderten Kathoden und die in die Kammer geförderten Anoden mittels eines Luftstroms zum Kammerboden hin gedrückt. Infolgedessen ist eine Sinkgeschwindigkeit der Kathoden und der Anoden erhöht, sodass eine Herstellungsrate des Elektrodenstapels mittels des Verfahrens vergleichsweise hoch ist.

Die Vorrichtung ist zur Herstellung eines Elektrodenstapels aus Anoden und Kathoden für eine Lithium-Ionen-Batterie, beispielsweise für eine (Traktions-) Batterie eines elektrisch angetriebenen Kraftfahrzeugs, eingerichtet und geeignet. Hierzu weist die Vorrichtung eine Kammer, welche auch als Fertigungszylinder bezeichnet wird, zur Aufnahme der Anoden und der Kathoden auf. Des Weiteren weist die Vorrichtung eine greiferlose Fördereinrichtung zum Überführen der Anoden und der Kathoden aus jeweils einem Magazin in die Kammer, insbesondere lediglich in der ersten Förderrichtung bzw. lediglich in der zweiten Förderrichtung, auf. Die Fördereinrichtung weist also keinen Greifer auf, welcher die Anoden und die Kathoden bei deren Überführung in die Kammer hält.

Die Vorrichtung weist mindestens zwei in der Kammer angeordnete Stempel auf, welche zur miteinander fluchtenden Ausrichtung von in der Kammer aufgenommenen Anoden und Kathoden parallel zu einem Kammerboden der Kammer und senkrecht zueinander verfahrbar sind. Beim Verfahren (Verstellen) der Stempel werden die an dem jeweiligen Stempel anliegenden Stirnseiten der Kathoden und der Anoden fluchtend miteinander ausgerichtet. Also sind die Stirnseiten der Kathoden und der Anoden parallel zueinander und zum jeweiligen Stempel.

Weiterhin weist die Vorrichtung eine senkrecht zum Kammerboden verfahrbare Kompressionseinheit auf. Diese dient der Erzeugung einer Presskraft auf die in der Kammer, zweckmäßigerweise alternierend, gestapelten und miteinander fluchtend ausgerichteten Anoden und Kathoden.

Aufgrund der fluchtenden Ausrichtung der Anoden und der Kathoden mittels der Stempel ist eine besonders fehlerunanfällige Ausrichtung der Anoden und der Kathoden zueinander realisiert.

Gemäß einer geeigneten Weiterbildung weist die Fördereinrichtung jeweils eine lediglich rotatorisch angetriebene Förderrolle zum Überführen der Anoden und der Kathoden auf. Das Rollenelement ist also nicht translatorisch verfahrbar, sondern örtlich feststehend, wobei das Rollenelement zum Überführen der Anoden und der Kathoden rotatorisch angetrieben ist. Das Rollenelement ist insbesondere als eine Walze, ein Rad, oder als eine Rolle ausgebildet. Beispielsweise weist das Rollenelement eine geraute Oberfläche auf, sodass die entsprechende Elektrode aufgrund einer Reibung zwischen dem rotierenden Rollenelement und der Elektrode gefördert wird. Die Vorrichtung ist zusammenfassend also greiferlos. Analog zum oben dargestellten Verfahren ist somit eine Vorrichtung realisiert, mittels welcher eine im Vergleich zu Vorrichtungen mit den eingangs erwähnten Greifersystemen zeitsparende Herstellung des Elektrodenstapels ermöglicht ist.

Beispielsweise weist die Fördereinrichtung zusätzlich Führungsschienen auf, mittels welchen die mittels der Förderrolle geförderten Anoden bzw. Kathoden in die Kammer geführt werden.

Beispielsweise werden die Stempel beim miteinander fluchtenden Ausrichten der Anoden und der Kathoden jeweils zu einer feststehenden Anlage, insbesondere einer Kammerwand, hin verfahren, wobei die Anlage die miteinander fluchtende Ausrichtung der an diesen anliegenden Stirnseiten der Kathoden und der Anoden bewirkt. Gemäß einer zweckmäßigen Ausgestaltung der Vorrichtung jedoch, sind in der Kammer vier Stempel angeordnet, wobei zwei der Stempel in und gegen eine erste Verfahrrichtung verfahrbar (verstellbar) sind und die beiden anderen Stempel in und gegen eine zur ersten Richtung senkrechte zweite Verfahrrichtung verfahrbar sind. So sind jede der Stirnseiten der Anoden und der Kathoden mittels des jeweiligen Stempels ausgerichtet. Zweckmäßigerweise liegt die erste Verfahrrichtung oder die zweite Verfahrrichtung in der Ebene, in welcher die Förderrichtungen verlaufen. Die Stempel sind nach dem gegeneinander Verpressen der Anoden und der Kathoden vom Elektrodenstapel weg verfahrbar. Infolgedessen ist eine Entnahme des Elektrodenstapels aus der Kammer erleichtert.

Die Kompressionseinheit ist zweckmäßigerweise in die Kammer und insbesondere zwischen die die Anoden und die Kathoden ausrichtenden Stempel verfahrbar.

Gemäß einer vorteilhaften Weiterbildung weist die Kompressionseinheit an deren dem Kammerboden zugewandten Seite eine Luftdüse auf. Vorzugsweise weist die Kompressionseinheit an deren dem Kammerboden zugewandten Seite mehrere Luftdüsen auf. Diese dienen der Erzeugung eines zum Kammerboden hin gerichteten Luftstroms. Mittels des Luftstroms werden die in die Kammer geförderten Anoden und Kathoden zum Kammerboden hin gedrückt, wodurch eine Sinkgeschwindigkeit der Anoden und der Kathoden erhöht ist. Infolgedessen ist die Herstellungsrate des Elektrodenstapels vorteilhafterweise erhöht.

Gemäß einer zweckmäßigen Ausgestaltung weist zumindest einer der Stempel eine Aussparung zur Aufnahme der elektrischen Kontaktierungen der Kathoden und/oder der Anoden beim Ausrichten auf. Der ausgesparte Stempel flankiert also die entsprechenden elektrischen Anschlüsse. Je nach Ausgestaltung, insbesondere je nach der Anordnung, der elektrischen Kontaktierungen der Anoden und der Kathoden, weist einer der Stempel eine Aussparung für die elektrischen Kontaktierungen der Anoden sowie der Kathoden auf. Alternativ weist einer der Stempel zwei zueinander beabstandete Aussparungen auf, wobei eine der Aussparungen für die elektrischen Kontaktierungen der Anoden und die andere Aussparung für die elektrischen Kontaktierungen der Kathoden vorgesehen ist. Weiter alternativ weisen zwei, insbesondere einander gegenüberliegende, Stempel jeweils eine Aussparung auf, wobei eine der Aussparungen für die elektrischen Kontaktierungen der Anoden und die andere Aussparung für die elektrischen Kontaktierungen der Kathoden vorgesehen ist.

Gemäß einer geeigneten Ausgestaltung ist mittels des Rollenelements ein Unterdruck erzeugbar. Aufgrund des Unterdrucks wird die Elektrode von den im jeweiligen Magazin gelagerten Elektroden vereinzelt und in der jeweiligen Förderrichtung beschleunigt, also mit einem Impuls beaufschlagt. Hierzu sind beispielsweise ein Luftkanal oder mehrere Luftkanäle im Rollenelement angeordnet, welche mit einer Luftabzugspumpe gekoppelt sind. Zusammenfassend sind sowohl ein Vereinzeln der im jeweiligen Magazin bereitgestellten Kathoden und Anoden, als auch deren Förderung in die Kammer mittels der jeweiligen Förderrolle realisiert.

Gemäß einer vorteilhaften Weiterbildung der Vorrichtung ist der Kammerboden mittels eines, insbesondere höhenverstellbaren, Förderbands gebildet. Anschließend an das gegeneinander Verpressen der Anoden und der Kathoden unter Bildung des Elektrodenstapels, ist der Elektrodenstapel somit in einfacher Weise durch ein Absenken des Kammerbodens von den Stempeln weg verfahrbar. Beispielsweise wird die Kompressionseinheit dabei mit dem Kammerboden abgesenkt. Insbesondere wird der Elektrodenstapel auf diese Weise vergleichsweise sicher gegen eine Beschädigung, beispielsweise aufgrund eines Hängenbleibens des Elektrodenstapels an einem der Stempel oder an einer der feststehenden Anlagen, aus der Kammer herausgegeben. Beispielsweise wird der Elektrodenstapel anschließend zu einem Lager gefördert oder zur weiteren Montage für eine Lithium-Ionen-Batterie bereitgestellt.

Nachfolgend wird ein Ausführungsbeispiel der Erfindung anhand einer Zeichnung näher erläutert. Darin zeigen:
- Fig. 1: ein Flussdiagramm, welches ein Verfahren zur Herstellung eines Elektrodenstapels repräsentiert, wobei bereitgestellte Anoden und bereitgestellte Kathoden greiferlos in eine Kammer gefördert werden,
- Fig. 2a: schematisch in einer Frontansicht eine Vorrichtung zur Herstellung eines Elektrodenstapels, wobei die Vorrichtung eine Fördereinrichtung mit lediglich rotatorisch angetriebenen Förderwalzen zur Förderung von Anoden und Kathoden in eine Kammer der Vorrichtung aufweist, und wobei die Vorrichtung Stempel zur miteinander fluchtenden Ausrichtung der Kathoden und der Anoden aufweist,
- Fig. 2b: schematisch in der Frontansicht die Vorrichtung, wobei der Kammerboden mittels eines höhenverstellbaren Förderbands gebildet ist, mittels welchem der Elektrodenstapel gefördert werden kann, und
- Fig. 3: schematisch die Vorrichtung in einer Draufsicht, wobei elektrische Kontaktierungen der Anoden und der Kathoden in Aussparungen der Stempel aufgenommen sind.

Einander entsprechende Teile und Größen sind in allen Figuren stets mit gleichen Bezugszeichen versehen.

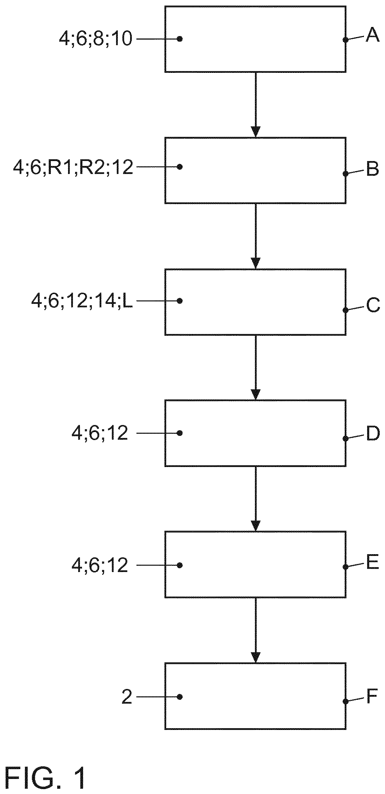

Das in der Fig. 1 gezeigte Flussdiagramm repräsentiert ein Verfahren zur Herstellung eines Elektrodenstapels 2 aus Anoden 4 und Kathoden 6. Der Elektrodenstapel 2 ist dabei für eine nicht weiter dargestellte Lithium-Ionen-Batterie, beispielsweise für eine (Traktions-) Batterie eines Kraftfahrzeugs, vorgesehen.

In einem ersten Schritt A werden die blattartigen Kathoden 6 in einem ersten Magazin 8 und die blattartigen Anoden 4 in einem zweiten Magazin 10 bereitgestellt. Die Anoden 4 und die Kathoden 6 werden zusammenfassend auch als Elektroden bezeichnet. Die Kathoden 6 sind dabei beidseitig mit einem Separator (einer Separatorfolie) laminiert, wobei der Verbund aus Separatorfolie und Kathode 6, also die laminierte Kathode 6, die gleichen Abmessungen aufweist wie die Anoden 4. Infolge dessen ist im Elektrodenstapel 2 zwischen den Anoden 4 und den Kathoden 6 jeweils ein Separator angeordnet.

In einem anschließenden zweiten Schritt B werden die Kathoden 6 in einer einzigen ersten (Förder-) Richtung R1 vom ersten Magazin 8 in eine Kammer 12 greiferlos gefördert. In analoger Weise werden die Anoden 4 in einer einzigen zweiten (Förder-) Richtung R2 von dem zweiten Magazin 10 in die Kammer 12 greiferlos gefördert. Dabei werden die Kathoden 6 und die Anoden 4 in der Kammer 12 alternierend gestapelt, wobei zuerst eine der Kathoden 6 in die Kammer 12 gefördert wird. Im Schritt B verlaufen die erste Richtung R1 und die zweite Richtung R2 in einer gemeinsamen, zum Kammerboden 14 senkrechten Ebene.

Hierbei werden in einem dritten Schritt C die in die Kammer 12 geförderten Kathoden 6 und die in die Kammer 12 geförderten Anoden 4 mittels eines Luftstroms L zu einem Kammerboden 14 der Kammer 12 gedrückt, so dass eine Sinkgeschwindigkeit der Anoden 4 und der Kathoden 6 zum Kammerboden 14 hin erhöht ist.

In einem vierten Schritt D werden die alternierend gestapelten Kathoden 6 und Anoden 4 in der Kammer 12 fluchtend ausgerichtet und in einem fünften Schritt E gegeneinander verpresst. Der somit gebildete Elektrodenstapel 2 wird in einem sechsten Schritt F für die Herstellung der Lithium-Ionen-Batterie bereitgestellt.

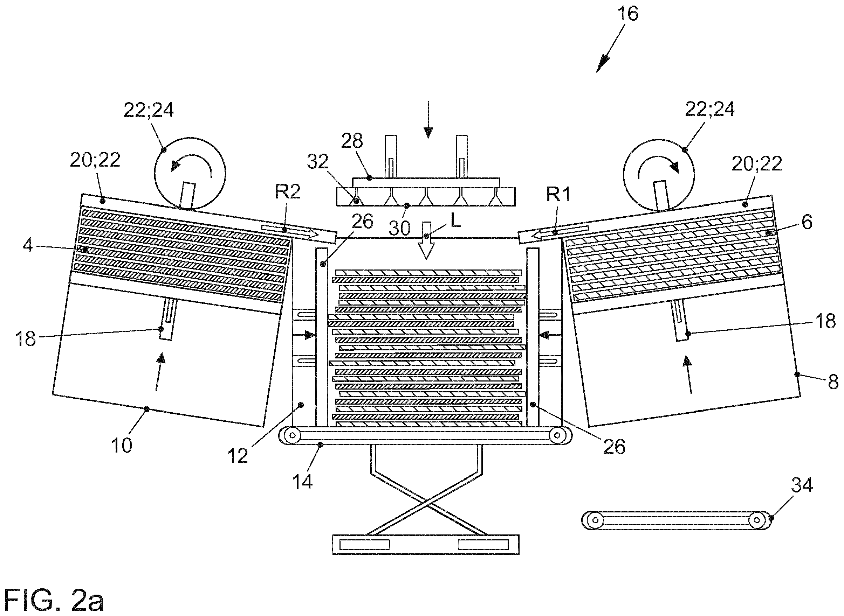

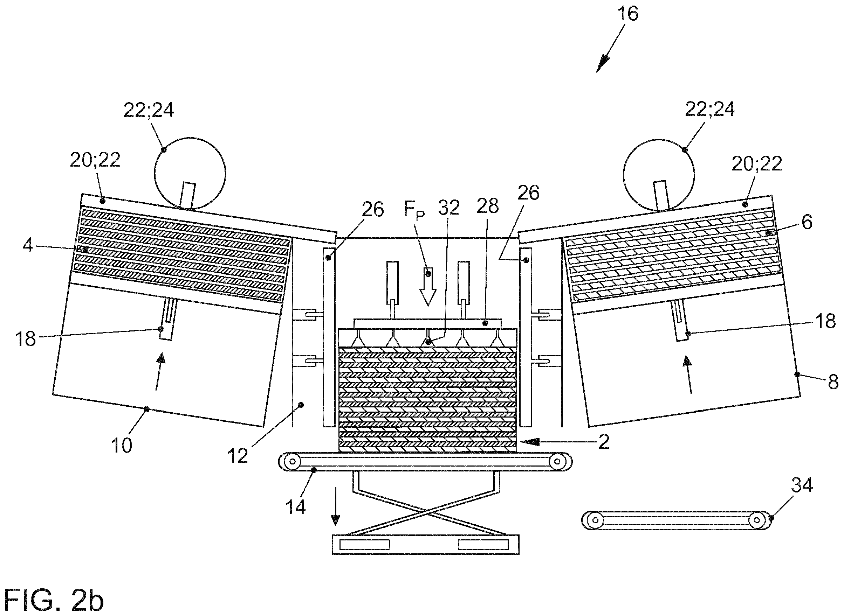

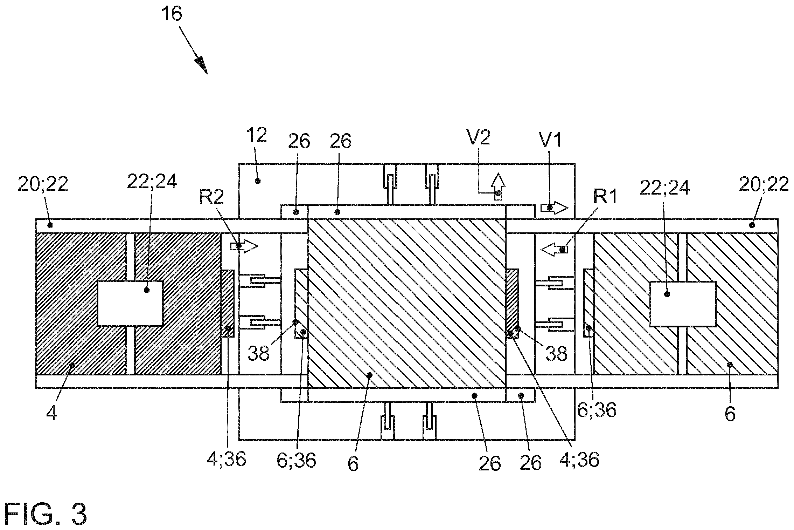

In den Figuren 2a, 2b und 3 ist schematisch eine Vorrichtung 16 zur Herstellung des Elektrodenstapels 2, insbesondere gemäß dem in der Fig. 1 dargestellten Verfahren, gezeigt.

Die Vorrichtung 16 weist das erste Magazin 8 und das zweite Magazin 10 auf, in welchen die Kathoden 6 bzw. die Anoden 4 zur Herstellung des Elektrodenstapels 2 bereitgestellt sind. Die beiden Magazine 8 und 10 weisen dabei jeweils eine Hubeinheit 18 auf, mittels welcher bei Entnahme einer der Katoden 6 oder einer der Anoden 4, die im jeweiligen Magazin 8 bzw. 10 verbleibenden Kathoden 6 bzw. Anoden 4 zu Führungsschienen 20 einer Fördereinrichtung 22 hin verstellt werden.

Die Fördereinrichtung 22 weist des Weiteren zwei als Walze ausgebildete Fördererrollen 24 auf, welche jeweils zwischen den Führungsschienen 20 angeordnet sind, und deren Drehrichtung jeweils mittels eines Pfeils dargestellt ist. Die Fördererrollen 24 sind dabei örtlich feststehend, also nicht translatorisch bewegbar, und lediglich rotatorisch angetrieben. Die Fördererrollen 24 weisen in nicht näher dargestellter Weise Mittel auf, welche beispielsweise als mit einer Vakuum- oder mit einer Luftabsaugpumpe verbundene Luftkanäle ausgebildet sind, mittels welchen ein Unterdruck erzeugbar ist.

Bei einer Rotation der Fördererrollen 24 wird die im jeweiligen Magazin 10 bzw. 8 obere, also der Fördereinrichtung 22 zugewandte, Anode 4 bzw. Kathode 6 aufgrund des Unterdrucks von den im jeweiligen Magazin gelagerten Anoden 4 bzw. Kathoden 6 vereinzelt und in der jeweiligen Förderrichtung R2 bzw. R1 beschleunigt. Die Führungsschienen 20 verhindern dabei ein undefiniertes Abweichen der Kathoden 6 und der Anoden 4 bei deren Förderung von deren Förderrichtung R1 bzw. R2. Zusammenfassend dienen die Führungsschienen 20 als Führung für die geförderten Anoden 4 und Kathoden 6.

Des Weiteren weist die Vorrichtung 16 die Kammer 12 mit dem Kammerboden 14 auf, in welche Kammer 12 die geförderten Anoden 4 und Kathoden 6 alternierend eingebracht werden. Wie in der Fig. 2a dargestellt ist, sind die Anoden 4 und die Kathoden 6 nach deren Aufnahme in der Kammer 12 zueinander undefiniert angeordnet, d. h. sie fluchten nicht bezüglich einer Richtung senkrecht zum Kammerboden 14.

Die Vorrichtung 16 weist ferner vier Stempel 26 auf, wobei zum Zwecke einer verbesserten Übersicht in den Figuren 2a, 2b lediglich zwei gezeigt sind. Die Stempel 26 sind dabei parallel zum Kammerboden 14 verfahrbar. Zwei der Stempel 26, welche einander gegenüberliegen, sind zudem in und gegen eine erste Verstellrichtung V1 verfahrbar, die anderen beiden Stempel 26 sind in und gegen eine zur ersten Verstellrichtung V1 senkrecht orientierten zweiten Verstellrichtung V2 verfahrbar. Zum miteinander fluchtenden Ausrichten der Kathoden 6 und der Anoden 4, werden die Stempel 26 aufeinander zu verfahren, wie insbesondere in Fig. 3 erkennbar ist. Die erste Verstellrichtung V1 verläuft dabei in oder parallel zu der Ebene, in welcher die erste Förderrichtung R1 und die zweite Förderrichtung R2 verlaufen.

Die Vorrichtung 16 umfasst eine Kompressionseinheit 28. Die Kompressionseinheit 28 weist an der den Kammerboden 14 zugewandten Seite 30 eine Anzahl an Luftdüsen 32 auf, mittels welchen ein zum Kammerboden 14 hin gerichteter Luftstrom L erzeugt werden kann. Mittels des Luftstroms L werden die in die Kammer 12 geförderten Anoden 4 und Kathoden 6 zum Kammerboden 14 hin gedrückt, sodass deren Sinkgeschwindigkeit zum Kammerboden 14 hin erhöht ist.

Mittels der Kompressionseinheit 28 werden die ausgerichteten Anoden 4 und Kathoden 6 gegeneinander verpresst. Hierzu wird die Kompressionseinheit 28 senkrecht zum Kammerboden 14 in die Kammer 12 verfahren und übt dort eine Presskraft F_{P} auf die Anoden 4 und die Kathoden 6 aus.

Der Kammerboden 14 ist mittels eines höhenverstellbaren Förderbands gebildet. Der Elektrodenstapel 2 aus gegeneinander verpressten Anoden 4 und Kathoden 6 ist folglich durch ein Absenken des als höhenverstellbares Förderband ausgebildeten Kammerbodens 14 von den Stempeln 26 weg verfahrbar. Hierbei ist das Absenken des Kammerbodens 14 mittels eines Pfeils repräsentiert. Mittels des abgesenkten Förderbandes wird der Elektrodenstapel 2 auf ein Transportband 34 gefördert. Das Transportband 34 dient dem Transport des Elektrodenstapels 2 zu einem Lager und/oder zu einer weiteren Vorrichtung zur Herstellung der Lithium-Ionen-Batterie.

Jede der Anoden 4 und jede der Kathoden 6 weisen jeweils eine elektrische Kontaktierung 36 auf, welche mittels eines Stromableiters der jeweiligen Elektrode 4 bzw. 6 gebildet ist. Dabei ragt die Kontaktierung 36 über eine Stirnseite der jeweiligen Elektrode 4 bzw. 6 hinaus. Die elektrischen Kontaktierungen 36 sind in der Fig. 2a und der Fig. 2b zum Zwecke einer besseren Übersichtlichkeit nicht dargestellt. Wie in der Fig. 3 erkennbar, sind die elektrischen Kontaktierungen der Anoden 4 und der Kathoden 6 an gegenüberliegenden, parallel zueinander verlaufenden Seiten des Elektrodenstapels 2 angeordnet. Entsprechend weisen zwei einander gegenüberliegende Stempel 26 jeweils eine Aussparung 38 auf, wobei eine der Aussparungen 38 zur Aufnahme der elektrischen Kontaktierungen 36 der Anoden 4 und die andere Aussparung 38 zur Aufnahme der elektrischen Kontaktierungen 36 der Kathoden 6 vorgesehen ist.

### Bezugszeichenliste

- 2: Elektrodenstapel
- 4: Anode
- 6: Kathode
- 8: erstes Magazin
- 10: zweites Magazin
- 12: Kammer
- 14: Kammerboden
- 16: Vorrichtung
- 18: Hubeinheit
- 20: Führungsschienen
- 22: Fördereinrichtung
- 24: Förderrolle
- 26: Stempel
- 28: Kompressionseinheit
- 30: Seite
- 32: Luftdüse
- 34: Transportband
- 36: elektrische Kontaktierung
- 38: Aussparung

- A: Verfahrensschritt Bereitstellen
- B: Verfahrensschritt Fördern
- C: Verfahrensschritt Drücken
- D: Verfahrensschritt Ausrichten
- E: Verfahrensschritt Verpressen
- F: Verfahrensschritt Bereitstellen

- F_{P}: Presskraft
- L: Luftstrom
- R1: erste Richtung
- R2: zweite Richtung
- V1: erste Verfahrrichtung
- V2: zweite Verfahrrichtung

## Patentansprüche

1. Verfahren zur Herstellung eines Elektrodenstapels (2) aus Anoden (4) und Kathoden (6) für eine Lithium-Ionen-Batterie, insbesondere eines elektrisch angetriebenen Kraftfahrzeugs,
- bei dem die Kathoden (6) in einem ersten Magazin (8) bereitgestellt und lediglich in einer ersten Richtung (R1) vom ersten Magazin (8) in eine Kammer (12) greiferlos gefördert werden,
- bei dem die Anoden (4) in einem zweiten Magazin (10) bereitgestellt und lediglich in einer zweiten Richtung (R2) vom zweiten Magazin (10) in eine Kammer (12) greiferlos gefördert werden, wobei die Kathoden (6) und Anoden (4) in der Kammer (12) alternierend gestapelt werden, und
- bei dem die alternierend gestapelten Kathoden (6) und Anoden (4) in der Kammer (12) fluchtend ausgerichtet und gegeneinander verpresst werden.

2. Verfahren nach Anspruch 1,
**dadurch gekennzeichnet,**
**dass** die erste Richtung (R1) und die zweite Richtung (R2) in einer gemeinsamen Ebene verlaufen, welche senkrecht zu einem Kammerboden (14) orientiert ist.

3. Verfahren nach Anspruch 1 oder 2,
**dadurch gekennzeichnet,**
**dass** die in die Kammer (12) geförderten Kathoden (6) und die in die Kammer (12) geförderten Anoden (4) mittels eines Luftstroms (L) zum Kammerboden (14) gedrückt werden.

4. Vorrichtung (16) zur Herstellung eines Elektrodenstapels (2) aus Anoden (4) und Kathoden (6) für eine Lithium-Ionen-Batterie, insbesondere eines elektrisch angetriebenen Kraftfahrzeugs, aufweisend
- eine Kammer (12) zur Aufnahme der Anoden (4) und der Kathoden (6),
- eine greiferlose Fördereinrichtung (22) zum Überführen der Anoden (4) und der Kathoden (6) aus jeweils einem Magazin (8,10) in die Kammer (12),
- mindestens zwei in der Kammer (12) angeordnete Stempel (26), die zur miteinander fluchtenden Ausrichtung in der Kammer (12) aufgenommener Anoden (4) und Kathoden (6) parallel zu einem Kammerboden (14) und senkrecht zueinander verfahrbar sind, und
- eine senkrecht zum Kammerboden (14) verfahrbare Kompressionseinheit (28) zur Erzeugung einer Presskraft (F_{P}) auf die in der Kammer (12) gestapelten und zueinander fluchtend ausgerichteten Anoden (4) und Kathoden (6).

5. Vorrichtung (16) nach Anspruch 4,
**dadurch gekennzeichnet,**
**dass** die Fördereinrichtung (22) zum Überführen der Anoden (4) und der Kathoden (6) jeweils eine lediglich rotatorisch angetriebene Förderrolle (24) aufweist.

6. Vorrichtung (16) nach Anspruch 4 oder 5,
**dadurch gekennzeichnet,**
**dass** in der Kammer (12) vier Stempel (26) angeordnet sind, wobei zwei der Stempel (26) in und gegen eine erste Verfahrrichtung (V1) verfahrbar sind und die beiden anderen Stempel (26) in und gegen eine zur ersten Richtung (V1) senkrechte zweite Verfahrrichtung (V2) verfahrbar sind.

7. Vorrichtung (16) nach einem der Ansprüche 4 bis 6,
**dadurch gekennzeichnet,**
**dass** die Kompressionseinheit (28) an deren dem Kammerboden (14) zugewandten Seite (30) eine Luftdüse (32) zur Erzeugung eines zum Kammerboden (14) hin gerichteten Luftstroms aufweist.

8. Vorrichtung (16) nach einem der Ansprüche 4 bis 7,
**dadurch gekennzeichnet,**
**dass** zumindest einer der Stempel (26) eine Aussparung (38) zur Aufnahme der elektrischen Kontaktierungen (36) der Kathoden und/oder der Anoden (4) aufweist.

9. Vorrichtung (16) nach einem der Ansprüche 5 bis 8,
**dadurch gekennzeichnet,**
**dass** mittels des Rollenelements (24) ein Unterdruck erzeugbar ist, wobei die Anoden (4) bzw. die Kathoden (6) aufgrund des Unterdrucks vom jeweiligen Magazin (8,10) in die Kammer (12) überführt werden.

10. Vorrichtung (16) nach einem der Ansprüche 4 bis 9,
**dadurch gekennzeichnet,**
**dass** der Kammerboden (14) mittels eines, insbesondere höhenverstellbaren, Förderbands gebildet ist.

## Claims

1. Method for producing an electrode stack (2) from anodes (4) and cathodes (6) for a lithium-ion battery, in particular of an electrically driven motor vehicle,
- in which the cathodes (6) are provided in a first magazine (8) and are conveyed without grippers from the first magazine (8) into a chamber (12) only in a first direction (R1),
- in which the anodes (4) are provided in a second magazine (10) and are conveyed without grippers from the second magazine (10) into a chamber (12) only in a second direction (R2), wherein the cathodes (6) and anodes (4) are stacked alternately in the chamber (12), and
- in which the alternately stacked cathodes (6) and anodes (4) are aligned flush with one another in the chamber (12) and are pressed against one another.

2. Method according to Claim 1,
**characterized in that**
the first direction (R1) and the second direction (R2) extend in a common plane, which is oriented at right angles to a chamber bottom (14).

3. Method according to Claim 1 or 2,
**characterized in that**
the cathodes (6) conveyed into the chamber (12) and the anodes (4) conveyed into the chamber (12) are pressed towards the chamber bottom (14) by means of an air stream (L) .

4. Apparatus (16) for producing an electrode stack (2) from anodes (4) and cathodes (6) for a lithium-ion battery, in particular of an electrically driven motor vehicle, having
- a chamber (12) for holding the anodes (4) and the cathodes (6),
- a gripper-less conveying device (22) for transferring the anodes (4) and the cathodes (6) from a respective magazine (8, 10) into the chamber (12),
- at least two plungers (26) arranged in the chamber (12), which can be moved parallel to a chamber bottom (14) and at right angles to each other in order that anodes (4) and cathodes (6) accommodated in the chamber (12) can be aligned flush with one another, and
- a compression unit (28) that can be moved at right angles to the chamber bottom (14) to produce a pressing force (Fₚ) onto the anodes (4) and cathodes (6) stacked in the chamber (12) and aligned flush with one another.

5. Apparatus (16) according to Claim 4,
**characterized in that** the conveying device (22) for transferring the anodes (4) and the cathodes (6) has a respective conveyor roller (24) that can be driven only in rotation.

6. Apparatus (16) according to Claim 4 or 5,
**characterized in that**
four plungers (26) are arranged in the chamber (12), wherein two of the plungers (26) can be moved in and counter to a first direction of movement (V1), and the two other plungers (26) can be moved in and counter to a second direction of movement (V2) at right angles to the first direction (V1).

7. Apparatus (16) according to one of Claims 4 to 6, **characterized in that**
the compression unit (28) has an air nozzle (32) on its side (30) facing the chamber bottom (14) for producing an air stream directed towards the chamber bottom (14).

8. Apparatus (16) according to one of Claims 4 to 7, **characterized in that**
at least one of the plungers (26) has a recess (38) to accommodate the electrical contacts (36) of the cathodes and/or the anodes (4).

9. Apparatus (16) according to one of Claims 5 to 8, **characterized in that**
it is possible to produce a negative pressure by means of the roller element (24), wherein the anodes (4) and the cathodes (6) are transferred from the respective magazine (8, 10) into the chamber (12) by means of the negative pressure.

10. Apparatus (16) according to one of Claims 4 to 9, **characterized in that**
the chamber bottom (14) is formed by a conveyor belt, in particular an adjustable-height conveyor belt.

## Revendications

1. Procédé de réalisation d'un empilement d'électrodes (2) formé d'anodes (4) et de cathodes (6) pour batterie à ions lithium, notamment d'un véhicule automobile à propulsion électrique, procédé dans lequel
- les cathodes (6) sont prévues dans un premier magasin (8) et ne sont transportées que dans une première direction (R1) du premier magasin (8) jusque dans une chambre (12) sans système de préhension,
- les anodes (4) sont prévues dans un deuxième magasin (10) et ne sont transportées que dans une deuxième direction (R2) du deuxième magasin (10) jusque dans une chambre (12) sans système de préhension, les cathodes (6) et les anodes (4) étant empilées alternativement dans la chambre (12), et
- les cathodes (6) et les anodes (4) empilées alternativement sont alignées et plaquées les unes contre les autres dans la chambre (12).

2. Procédé selon la revendication 1,
**caractérisé en ce que**
la première direction (R1) et la deuxième direction (R2) s'étendent dans un plan commun qui est orienté perpendiculairement à un fond de chambre (14).

3. Procédé selon la revendication 1 ou 2,
**caractérisé en ce que**
les cathodes (6) transportées jusque dans la chambre (12) et les anodes (4) transportées jusque dans la chambre (12) sont pressées vers le fond de chambre (14) au moyen d'un flux d'air (L).

4. Dispositif (16) de réalisation d'un empilement d'électrodes (2) formé d'anodes (4) et de cathodes (6) pour une batterie à ions lithium, notamment d'un véhicule automobile à propulsion électrique, ledit dispositif comportant
- une chambre (12) destinées à recevoir les anodes (4) et les cathodes (6),
- un mécanisme de transport sans système de préhension (22) destiné à transférer les anodes (4) et les cathodes (6) d'un magasin respectif (8, 10) jusque dans la chambre (12),
- au moins deux pistons (26) disposés dans la chambre (12) et déplaçables parallèlement à un fond de chambre (14) et perpendiculairement l'un à l'autre afin d'aligner des anodes (4) et des cathodes (6), reçues dans la chambre (12), les unes avec les autres, et
- une unité de compression (28) qui peut être déplacée perpendiculairement au fond de chambre (14) afin de générer une force de pression (F_{P}) sur les anodes (4) et les cathodes (6) empilées dans la chambre (12) et alignées les unes avec les autres.

5. Dispositif (16) selon la revendication 4,
**caractérisé en ce que**
le mécanisme de transport (22) destiné au transfert des anodes (4) et des cathodes (6) comporte un rouleau de transport respectif (24) entraîné uniquement en rotation.

6. Dispositif (16) selon la revendication 4 ou 5, **caractérisé en ce que**
quatre pistons (26) sont disposés dans la chambre (12), deux des pistons (26) étant déplaçables alternativement dans une première direction de déplacement (V1) et les deux autres vérins (26) étant déplaçables alternativement dans une deuxième direction de déplacement (V2) perpendiculaire à la première direction (V1).

7. Dispositif (16) selon l'une des revendications 4 à 6,
**caractérisé en ce que**
l'unité de compression (28) comporte sur son côté (30) dirigé vers le fond de chambre (14) une buse d'air (32) destinée à générer un flux d'air dirigé vers le fond de chambre (14).

8. Dispositif (16) selon l'une des revendications 4 à 7,
**caractérisé en ce que**
l'un au moins des pistons (26) comporte un évidement (38) destiné recevoir les contacts électriques (36) des cathodes et/ou des anodes (4).

9. Dispositif (16) selon l'une des revendications 5 à 8,
**caractérisé en ce que**
une pression négative peut être générée au moyen de l'élément de rouleau (24), les anodes (4) ou les cathodes (6) étant transférées du magasin respectif (8, 10) jusque dans la chambre (12) en raison de la pression négative.

10. Dispositif (16) selon l'une des revendications 4 à 9,
**caractérisé en ce que**
le fond de chambre (14) est formé au moyen d'une bande transporteuse, en particulier réglable en hauteur.
